Europäisches Patentamt

European Patent Office

Office européen des brevets

(19)

(11) Publication number: **0 105 621**

**A2**

(12)

# EUROPEAN PATENT APPLICATION

(21) Application number: **83305115.4**

(22) Date of filing: **05.09.83**

(51) Int. Cl.³: **B 60 R 25/00**

(30) Priority: **08.09.82 GB 8225626**

(43) Date of publication of application:
**18.04.84 Bulletin 84/16**

(84) Designated Contracting States:
**AT BE CH DE FR IT LI LU NL SE**

(71) Applicant: **H. Roberts & Brooks (Syston) Limited**
**1309 Melton Road**
**Leicester(GB)**

(72) Inventor: **Roberts, Bryan**
**1313 Melton Road**
**Syston Leicestershire(GB)**

(74) Representative: **Hallam, Arnold Vincent et al,**
**E.N. LEWIS & TAYLOR 144 New Walk**
**Leicester LE1 7JA(GB)**

(54) Trailer security device.

(57) A device for parking a trailer has a post (1) which has a laterally extending plate (5) on which a coupling ball (3) is rigidly secured. The lower end of the post can be embedded in a concrete base or the post itself can be secured to, for example, a wall with the coupling ball (3) arranged at a suitable height to support a towing hitch (4) of a trailer. When the hitch (4) is located on the ball (3) a locking plate (9) which is freely slidable along the post (1) above the ball (3) is moved into position closely overlying the hitch (4). Rotation of the plate (9) is prevented by a bar (6) passing through a slot in the plate and the plate is padlocked in position utilising the most suitable of holes (7) in the bar (6). Once the plate (9) is locked in position the hitch (4) cannot be removed. The device, therefore, not only provides a rigid and stable anchorage for a trailer but also simply and effectively secures the trailer against theft.

Fig.1.

"TRAILER SECURITY DEVICE"

The invention relates to a security device for parking a trailer, for example a trailer caravan, so that it is secured against unauthorised removal. It is particularly concerned with a security device for use with a trailer fitted with a conventional towing hitch comprising a socket to receive a ball coupling on a towbar fitted to the towing vehicle.

The object of the invention is to provide a security device which allows a trailer to be parked and safely left unattended without the risk of being stolen, the trailer being secured very easily and equally easily released when required. A further object is to provide such a device which supports the trailer when secured, so that it is not necessary additionally to support the trailer while parked or even to apply the trailer brakes.

According to the invention a security device for parking a trailer comprises a hitching post on which there is mounted a coupling member for engaging a towing hitch of the trailer, and a movable locking member mounted for movement, after the hitch has been fitted over the coupling member, to a locking position closely overlying the hitch in which position it can be locked to retain the hitch captive on the coupling member.

The hitching post can be permanently fixed into the ground, for example being set into concrete, or it may be removably mounted to allow removal whilst the trailer is being manoeuvered into position. Thus the post may be mountable in a fixed ground socket to which it can be locked when fitted, for example by means of a padlock. The coupling member, conveniently a ball, may be mounted at a fixed height on the post, or alternatively be adjustable in height thereon. Thus the ball may be fixed in the adjusted position by locking screws with the post extending above the coupling height for a sufficient distance to prevent the sleeve being slid off the post when the trailer hitch is engaged.

In any case the post preferably extends well above the coupling height with the locking member in the form of an apertured plate which is slidable on the post (or the sleeve) over a locking bar fixed relatively to the coupling ball. This locking bar may have a series of holes through the appropriate one of which a padlock can be fitted to lock the plate in the locking position immediately above the engaged trailer hitch.

The invention will now be further described with reference to the accompanying drawings which illustrate, by way of example, embodiments of the invention. In the drawings:

Figure 1 shoes a perspective view of a first embodiment of a device according to the present invention, in an unlocked state, with an associated trailer hitch;

Figure 2 is a perspective view similar to that of Figure 1 but showing the trailer hitch locked in engagement with the device;

Figure 3 is a plan view of a locking plate of the device    of Figures 1 and 2; and

Figures 4 to 7 are perspective views of further embodiments of devices according to the present invention.

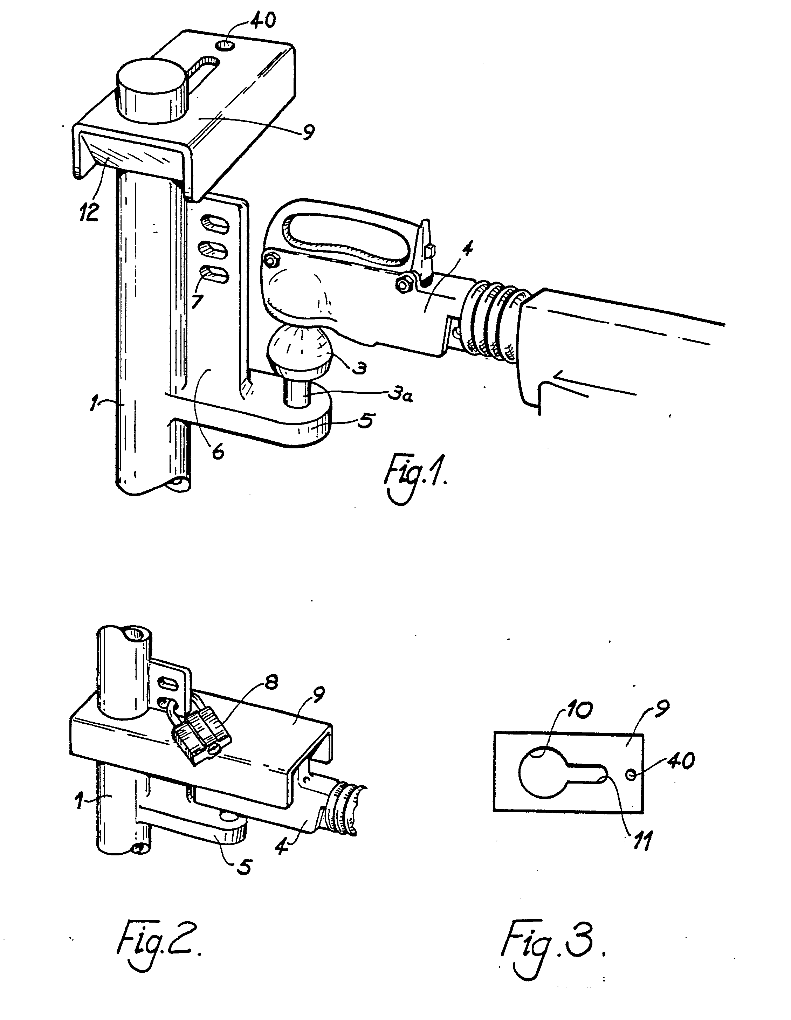

The embodiment of Figures 1 and 2 has a fixed tubular steel hitching post 1 permanently set into a block of concrete in the ground. A coupling ball 3 to fit the towing hitch 4 of a trailer to be parked has an integral stem 3a welded to a thick-section mounting plate 5 which projects horizontally from the post 1 to which it is securely welded at a fixed height to suit the trailer. A rectangular section locking bar 6 extends longitudinally of the post 1 in the manner of a spine, and this is welded to the upper surface of the mounting plate 5 and to the tube 1 to produce an extremely strong fabrication. The bar 6 has a series of e.g. three holes such as 7, through any one of which a security padlock 8 can be fitted.

A locking plate 9 is freely slidable along the post 1 above the coupling ball 3 and mounting plate 5. This plate, as shown in Figure 3, has a through aperture with a circular portion 10 which fits freely around the post 1 and a radially directed slot portion 11 which fits freely over the locking bar 6. At the rear of the post 1 a rectangular plate 12 is welded to the underside of the plate 9 immediately adjacent its rearward edge. This plate 12 extends downwardly towards the aperture portion 10 for a sufficient distance to prevent material tilting of the plate 9 on the post 1 when the padlock 8 is fitted as shown in the drawings, thus providing greater security.

As can be seen from Figure 1, with the locking plate 9 overlying the engaged trailer hitch 4 and the padlock 8 fitted to the appropriate hole 7 above the plate 9 the trailer is securely locked to the post 1. The plate 12 prevents the plate 9 being tilted sufficiently to free the hitch 4 without removal of the padlock 8.

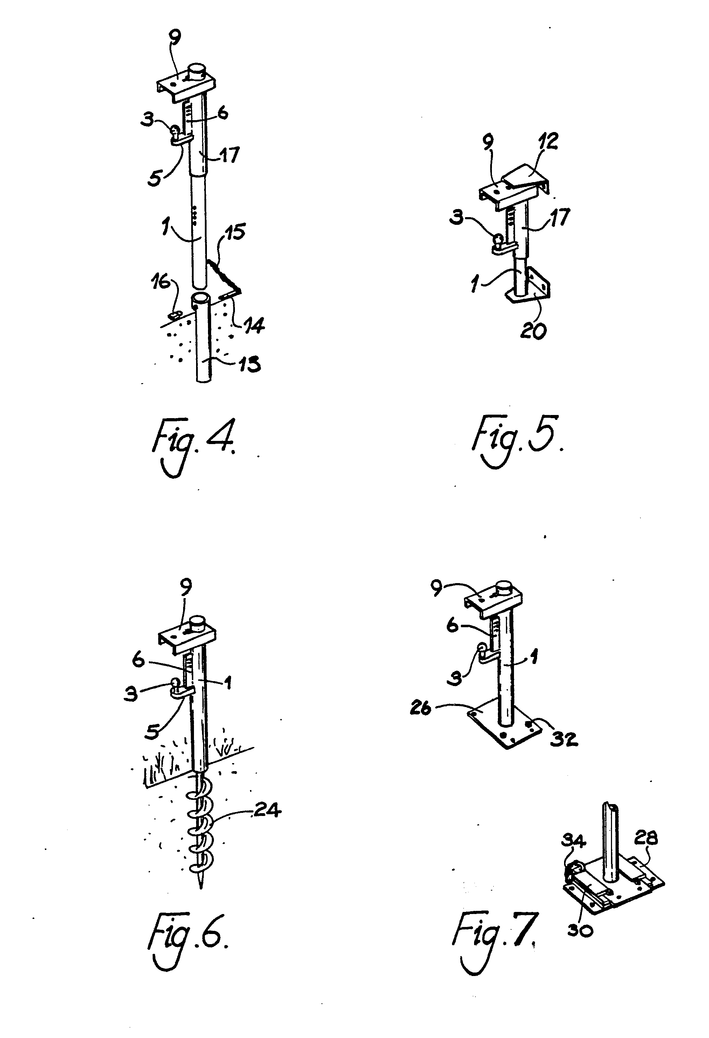

Figures 4 to 7 show further embodiments of devices according to the present invention. The drawings utilise the same reference numerals for like parts in respect of all the illustrated embodiments. The device of Figure 4 differs from that of Figures 1 to 3 in that the post 1 is removably supported in a base support member in the form of a fixed ground socket 13. Thus the post 1 can be lifted out of the socket if this is necessary to facilitate positioning of the trailer, or so that there is no obstruction when the post is not in use. To fix the post 1 in the socket 13 a captive cross pin 14, fixed to the post 1 for example, by a chain 15, is passed through aligned bores in the post and socket. When so fitted to secure the post 1 in the socket 13 the pin 14 is locked

0105621

-5-

by means of a padlock 16.

To enable the height of the coupling ball to be adjusted the mounting plate 5 is not welded directly to the post 1 but instead is welded to a sleeve 17 slidable on the post 1. The locking bar 6 is also welded to the sleeve 17, which is freely slidable on the post 1 for adjustment and is fixed in the adjusted position by locking screws (not shown in the drawings). The locking plate 9 now slides on the sleeve 17 and bar 6.

The ball/sleeve unit 3, 17 of this embodiment may be additionally supported by wall mounting brackets 20 and 21 fitted below and above the sleeve 17, as shown in Figure 5. The sleeve 17 may be securely supported directly between the wall brackets 20 and 21 or on a post mounted on the lower bracket 20.

In the embodiment shown in Figure 6 the post 1 is provided with a ground screw 24 to enable the post to be driven into earth for temporary use. Once a trailer towing hitch is locked to the ball 3 it is not possible to remove the post by rotating it out of the earth.

In the device of Figure 7 the post 1 is rigidly supported on a base plate 26 which allows the device to be bolted to, for example, a concrete base using a clamp plate 28. The base plate 26 is located in position by sliding two opposing edge regions under co-operating flanges 30 on the clamp plate. Two lugs 32 on the base plate adjacent one end engage with respective end edges of the flanges 30 to prevent further sliding movement of the base plate relative to the clamp plate while a padlock 34 can be locked to the base plate adjacent its end opposite the lugs 32 to prevent reverse sliding movement and secure the device to the clamp plate. The clamp plate in turn is secured to the concrete base in any suitable manner, for example by expanding masonary bolts.

Referring to Figure 5 the two brackets 12 and 20 may be modified to enable the device to be supported on horizontal rails spaced apart a suitable distance. To this end, the brackets may include sleeves (not shown) laterally spaced from the post 1 and arranged with their axes  horizontal to allow the sleeves to be slid onto horizontal rails, thus providing for lateral movement of the device along the rails. In this arrangement a number of such devices may be provided and their spacing adjusted to suit the type of trailer to be secured to the devices.

Finally, the locking plate 9 is provided with a hole 40 to allow insertion of a suitable pin (not shown) when the device is used with a towing hitch having a ring coupling. The pin is inserted through the hole 40 to prevent removal of the ring coupling.

Although usable with any type of trailer having a towing hitch of the correct type, the invention is of especially valuable opeation to the securing of parked trailer caravans particularly when left unattended in a caravan parking site. The illustrated embodiments fully support a parked caravan, and it is not necessary either to support the caravan on jacks or to apply the caravan brakes. In addition to the security parking aspect, the hitching device if the invention also provides a ground anchor which is a valuable aspect in stormy and gale conditions.

0105621

-1-

CLAIMS:

1. A device for parking a trailer comprises a hitching post on which there is mounted a coupling member for engaging a towing hitch of the trailer, and a movable locking member mounted for movement, after the hitch has engaged the coupling member, to a locking position closely overlying the hitch in the which position it can be locked to retain the hitch captive on the coupling member.

2. A device as claimed in claim 1 further comprising means for enabling adjustment of the height of the coupling member.

3. A device as claimed in claim 2 wherein said means comprises a sleeve slidably supported co-axially on said post, said coupling member and said locking member being mounted on said sleeve.

4. A device as claimed in any of claim 1 to 3 further comprising a base support member and wherein said post is adapted to be detachably secured to said base support member.

5. A device as claimed in claim 4 wherein said base support member is a fixed ground socket adapted to receive said post.

6. A device as claimed in any of claims 1 to 3 further comprising means for securing said device to a wall or the like.

7. A device as claimed in claim 6 wherein said securing means comprises bracket means for securing said post to a wall or the like in a substantially upright attitude.

8. A device as claimed in any od claims 1 to 7 wherein said locking member comprises an aperture through which said post extends, said locking member is rotatable between said locking position and a position clear of said coupling member and further comprising means for preventing rotation of said locking member when in said locking position.

9. A device as claimed in claim 8 wherein said means for preventing rotation of said locking member comprises a locking bar which is secured relative to said coupling member and is engageable in a co-operating slot in said locking member to prevent rotation thereof relative to the coupling member.

C105621

1/2

Fig.1.

Fig.2.

Fig.3.

Fig.4.

Fig.5.

Fig.6.

Fig.7.